Europäisches Patentamt

European Patent Office

Office européen des brevets

(19)

(11) Publication number: **0 196 289**
**A2**

# EUROPEAN PATENT APPLICATION

(21) Application number: **86850108.1**

(22) Date of filing: **25.03.86**

(51) Int. Cl.⁴: **G 07 F 7/08,** G 07 F 7/02

(30) Priority: **28.03.85 SE 8501550**

(43) Date of publication of application: **01.10.86**
**Bulletin 86/40**

(84) Designated Contracting States: **AT CH DE GB IT LI**

(71) Applicant: **AB ALMEX, Box 30105, S-104 25 Stockholm (SE)**

(72) Inventor: **Junttl, Tord, Helsingörsgatan 35,
S-163 42 Spanga (SE)**
Inventor: **Hedström, Lars, Ellagardsvägen 78,
S-183 39 Täby (SE)**
Inventor: **Svedmyr, Inger, Tibastvägen 12,
S-162 40 Vällingby (SE)**
Inventor: **Granberg, Rune, Gamla Magelungsvägen 58,
S-125 41 Älvsjö (SE)**

(74) Representative: **Wiedemann, Bernd et al, AB Dahls
Patentbyra P.O. Box 19519, S-104 32 Stockholm (SE)**

(54) **A method of checking the genuineness of a ticket and a ticket for use in carrying out the method.**

(57) The invention relates to a ticket and a method of check-ing the genuineness of such a ticket. The ticket includes a substructure (1) with a strip (14) of electrically conductive material. The strip (14) is formed with a zone (13) spaced from two opposing side edges (11, 12) of the strip, this zone having an electrical conductivity deviating from that of the first and second edge areas (11, 12) of the strip (14) separated by the zone (13). For checking the genuineness of the ticket the electrical conductivity between at least a first measuring point (21) in the first edge area (11') and a second measuring point (22) in the second edge area (12') is measured, a first measurement value being thus obtained, and between the first measuring point and a third measuring point (23) in the first edge area (11'), a second measurement value being obtained, and possibly forming a quotient of the measure-ment values and in that the necessary condition for a genuine ticket is that the first measurement value lies within a first interval and that the second measurement value lies within a predetermined second interval or that the quotient lies within a predetermined third interval.

0196289

45386/BW/UP/25/ 860314

The Swedish Patent Application 8501550-1

AB Almex

The present invention relates to a method of checking the genuineness of a ticket and a ticket for use in carrying out the method.

In ticket inspection, particularly in conjunction with travel on public transport, e.g. buses, underground railways etc, electronic apparatus is replacing more and more the visual and manual examinations, and thereby the cancelling of the ticket or parts thereof occurring in certain cases. Completely different demands are thus made on the implementation of the ticket and the method of checking that the ticket inserted in the electronic inspection apparatus has not been subjected to unauthorized tampering.

A known method of carrying out such inspection includes providing the ticket, which comprises a substructure of an electrically non-conductive material, e.g. paper, with an area or strip of an electrically conductive material. This material can be an electrically conductive pigment, which is printed on the ticket. Conductivity is then measured between two preselected measuring points. The ticket is accepted as being genuine when the measured value of conductivity exceeds a predetermined threshold value.

One object of the present invention is to provide a method making tampering very difficult or impossible.

A second object is to provide a ticket for use with the inventive method, this ticket being difficult to falsify.

These objects are obtained in accordance with the invention with a ticket, which includes a substructure of a material which is not electrically conductive or only slightly so, with at least one strip of an electrically conductive material, the strip including a zone spaced from the side edges thereof and having electric conductivity deviating from the conductivity of the first and second edge areas of the strip separated by the zone. The method includes measuring electric conductivity between a first measuring point in the first edge area, and a second measuring point in the second edge area, a first measurement value thus being obtained, and between the first measuring point and a third measuring point in the first edge area, thus obtaining a second measurement value, and possibly forming a quotient of the measurement values and that the necessary condition for a genuine ticket is that the first measurement value lies within a predetermined first interval and that the second measurement value within a predetermined second interval, or that the quotient is within a predetermined third interval. The mentioned intervals may be open or closed intervals. Other preferred embodiments of the present method are apparent from the subclaims 2 - 4.

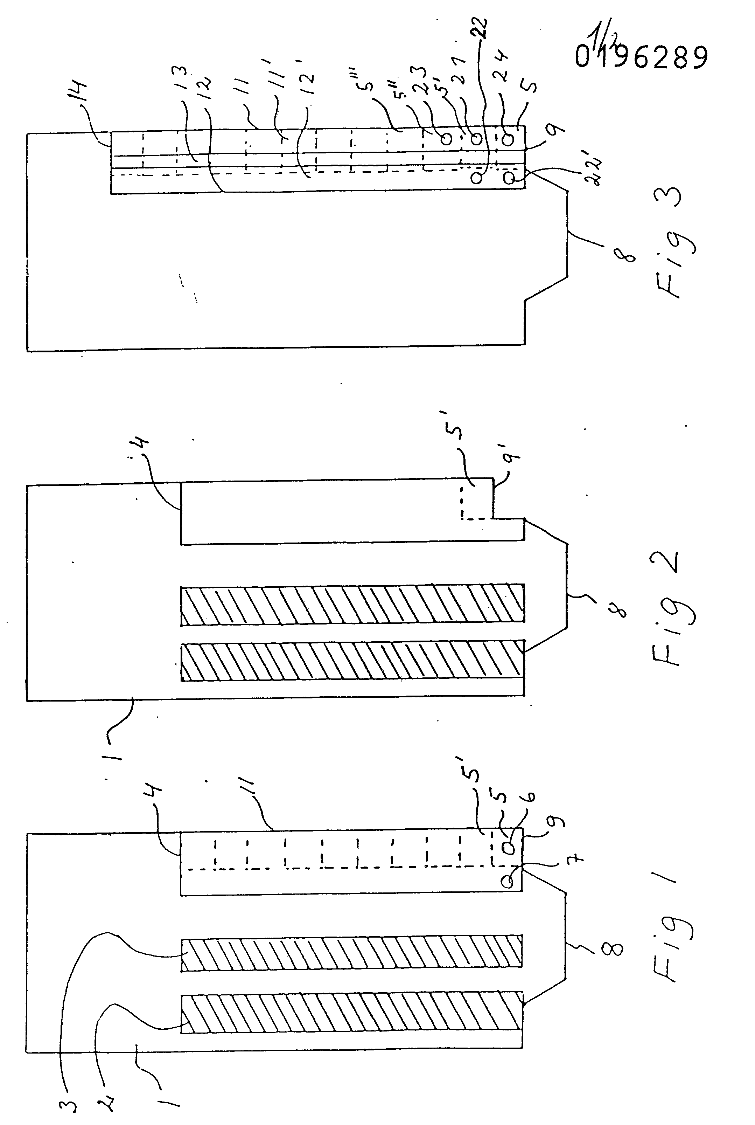

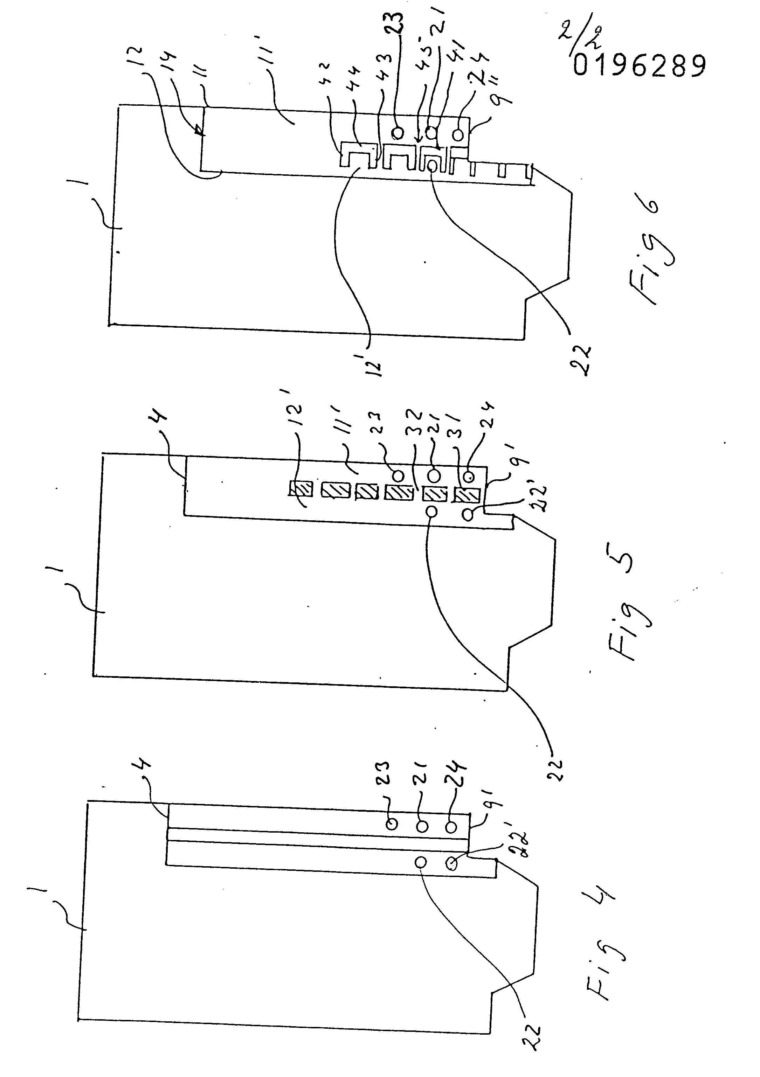

Preferred embodiments of the ticket are disclosed in subclaims 6 -16, and by the following detailed description carried out with the aid of the accompanying drawing, on which Figure 1 is a known unused ticket for ten journeys, Figure 2 illustrates the ticket of Figure 1 when a journey has been cancelled, Figure 3 is an unused ticket in accordance with the invention for ten journeys, Figure 4 illustrates the ticket according to Figure 3 where a journey has been cancelled and Figures 5 and 6 illustrate preferred embodiments of the inventive ticket where respectively one and two journeys have been cancelled.

Figure 1 illustrates a known ticket comprising a substructure 1 of an electrically non-conductive material, e.g. paper or plastics. Three strips 2, 3 and 4 are provided on the substructure, and of these strip 4 on the right hand side is used to check the genuineness of the ticket. Both other strips 2 and 3 are used for storing information, e.g. the validity time of the ticket. The ticket illustrated in Figure 1, as well as the others illustrated on the drawing, is intended for a given number of journeys, i.e. ten. Each journey is indicated on the ticket in Figure 1 by dashed lines denoted 5, 5' etc. Each journey is thus represented by a field with the shape of a rectangle, square or other format. Two measuring points 6 and 7 are marked by small circles. The strip 4 is of an electrically conductive material.

When the known ticket is used, it is inserted in an inspection apparatus with the edge 8 as the forward edge, the apparatus advancing the ticket until the right hand part 9 of the ticket front edge comes into contact with a sensor. Conductivity is then measured between the measuring points 6 and 7, the line of communication of which may be at right angles to the side edges 11 and 12 of the ticket. When the value of the conductivity exceeds a predetermined threshold value the ticket is accepted, providing that remaining information read from the ticket states that the ticket is valid. A journey is then cancelled by the rectangle 5 being cut from the ticket and the ticket right hand part being given a new right hand front edge 9', as illustrated in Figure 2. When the ticket is used again, it is advanced until the edge 9' comes into contact with the sensor, the distance between the edge 9' and the measuring points 6 and 7 will be equally as great as the distance between the edge 9 and the measuring points 6 and 7 before the first cancellation. When the ticket has been used for ten journeys, for which it is valid, the measuring points 6 and 7 come outside the strip 4 and the threshold value for the conductivity is not attained.

An example of tampering with the known ticket is that a rectangular part corresponding to the part cut off for cancellation is applied with the aid of tape, for example. The ticket can thus be used more times than the intended number of times.

The ticket in accordance with the invention comprises a substructure 1 of an electrically non-conductive material, e.g. paper, carton or plastics. When the material is paper it has a basis weight of 100 to 500 $g/m^2$, particularly preferred being 200 - 300 $g/m^2$. An inventive ticket for ten journeys is illustrated in Figure 3. On the right side of the ticket there is an electrically conductive strip 14 having two edge areas 11' and 12' and a zone 13 spaced from the edges 11 and 12 of the strip 14. The edge areas 11' and 12' of the strip 14 may be a coating of an electrically conductive pigment of uniform thickness. The edge areas may have the same or different thicknesses, the same or different conductivities in relation to each other. The zone 13 may be a coating of the same thickness as the edge areas 11' and 12' but with another specific conductivity. The coating of the zone may also be a pigment. The zone 13 may also be of the same material as the edge zones 11' and 12' but of another thickness. Other embodiments of the zone are given in the following. Two measuring points 21 and 22, corresponding to the measuring poins 6 and 7 in Figure 1, are at a constant distance from each other and a constant distance from the edges 9, 9' etc. The measurement value for the conductivity between the measuring points 21 and 22 may be obtained either empirically by measurements or by calculation with guidance from known constants and known geometry. With guidance from the expective value an interval is determined within which the measurement value range must lie for the ticket to be accepted.

The zone 13 may have a width corresponding to up to 80 % of the strip width, or may have a least possible width, i.e. its width can be almost zero. The zone 13 thus constituted by the boundary layer between the two edge areas (11' and 12') which may have the same thickness but different conductivity or different thickness and the same or different conductivity.

However, the conductivity of the zone 13 must differ from that of both the first (11') and the second edge area (12').

In using the ticket according to Figure 3, the same procedure is adopted as described in conjunction with Figure 1. In accordance with the invention an absolute measurement of the conductivity between the measuring points 22' and 24 is carried out. When this measurement value lies within the predetermined interval the ticket is accepted as genuine. To be valid as a travel document the remaining information obtained from the ticket must state that the ticket is valid. A journey is then cancelled by a rectangular part of the ticket being cut off so that a ticket of the appearance in Figure 4 is obtained. By the zone 13 having a conductivity different from that of the edge areas 11' and 12' it is considerably more difficult to tamper with the ticket.

According to an other embodiment which increases the safety against tampering, the conductivity between the first measuring point 24 and a third measuring point 21 in the same edge area 11' is also measured. For an acceptable ticket two mutually independent conditions must be met, namely that the measurement value for the conductivity between the point 24 and 22' lies within a first predetermined interval and that the measurement value of the conductivity between the point 24 and 21 lies within a predetermined second interval. Now, as in the following, validity criteria given on the ticket must be met for the ticket to be valid as a travel document.

A modification of this embodiment is that a quotient is formed of the measurement values obtained, and this quotient must lie between a predetermined third interval for an acceptable ticket. This method is thus based on relative measurement.

According to a particularly preferred embodiment, a part of the ticket is cancelled by cutting off a part which may be rectangular. When the necessary condition for a valid ticket has been met, a portion is cut off which includes the area for the first measuring point, i.e. the part nearest in turn for cancellation. Conductivity is once again measured between the first and the position for the third measuring point. The mesurement value for the new measurement shall essentially be zero, since there is now no conductive communication between the measuring points. With reference to Figure 3, the first measuring point is denoted 24, the second 22' and the third 21. In this case the area about the measuring point 24 is cut off.

In another embodiment, the conductivity between a first measuring point 21 in the first edge area 11' and a second measuring point 22 in the second edge area 12' is measured. The third measuring point in the first edge area 11' is then denoted 24. On cancellation of a journey by cutting off a field, the field 5 will naturally be cut away, this being the one on which the third measuring point was placed. After cancellation of the first journey the ticket will have the appearance illustrated in Figure 4.

These inventive embodiments thus require 11 fields 5, 5', 5" etc for ten journeys to be cancelled.

According to a still further embodiment, the first measuring point is 21, the second is 22 and the third is 23. A fourth measuring point 24 is subsequently provided in the edge area 11'. This measuring point lies on the part of the edge area 11' which is cut off for cancelling a journey. According to this embodiment the condition shall be met that the measurement value for conductivity between the points 21 and 24 lies within a predetermined fourth interval, as well as that the quotient shall lie within the third interval or that the measurement value for the conductivity between the points 21 and 22 as well as between 21 and 23 shall lie within their respective intervals, after which the field 5 in Figure 3 is cut off. This embodiment requires 12 fields 5, 5', 5" etc.

According to a still further embodiment, measurements are met between the 21 and 22, 21 and 23 as well as between 21 and 24, a journey being cancelled by such as a rectangular part of the ticket lying about the measuring point 24 being cut off. A new measurement is subsequently made between the measuring points 21 and 24 to check that a journey really has been cancelled. The measurement value for the new measurement should be essentially zero, since the measuring point 24 does not come into contact with electrically conductive material in the connection to the measuring point 21. According to this embodiment the last-mentioned condition as well as remaining given conditions must be met.

When a ticket for a given number of journeys is inserted, and all the areas denoting a journey have already been cancelled, the ticket will have a placing in the inspection apparatus such that at least the measuring point 21 comes outside the strip 14 in the edge area 11'.

Figure 5 illustrates an embodiment of the ticket where the zone 13 comprises the area 31 of a first kind with a different conductivity from that of the edge areas 11', 12'. The conductivity is preferably essentially zero, i.e. the area 13 has no coating, or is coated with an electrically non-conductive material. The edge areas are connected to each other via band 32 with the same conductivity as the edge areas 11' and 12', or with a conductivity deviating therefrom. If the areas 31 lack conductivity the criterion value for the conductivity between the two measuring points 21 and 22 may be selected by suitable selection of the strip width and the specific conductivity of the material. The ticket according to Figure 5 has ten areas 31. For each cancellation a portion of the ticket is cut off corresponding to the length of the area 31 plus the width of the strip 32. The zone 13 up to the measuring point 24 is preferably included in the cut-off portion. Depending on the method of applying the measuring point, there are further required one or two areas 31, which cannot be cut away and which are not shown.

Figure 6 illustrates a very much preferred embodiment of the ticket. According to this embodiment the ticket in the area 1 has been coated with a electrically conductive pigment, e.g. by letter press printing. In this case the area 41 has been left without coating or has been coated with an electrically non-conductive pigment. The areas 41 comprise two preferably parallel bands 42 and 43 at right angles to the longitudinal direction of the ticket, and are connected at their end point by a band 44 preferably parallel to the longitudinal direction of the ticket. The electrical connection is provided by the bands 45 which have minor width. Only the measuring points 21 and 22 are marked out.

In using tickets valid for an unlimited number of journeys during a period, e.g. monthly tickets, the strip 14 and thereby the zone 13 and edge areas 11' and 12' have shorter length. It is then sufficient that at least the measuring points 21 and 22 are on the strip 14. It is also preferred that the point 23 is also in the edge area 11'. Of course no cancellation of journeys takes place, where the cancellation is effected by a portion of the ticket being cut off.

The invention is not limited to the illustrated embodiments but may be varied within the scope of the inventive concept and the claims.

## CLAIMS

1.        A method of checking the genuineness of a ticket, which includes a strip of an electrically conductive material, said strip being formed with a zone spaced from two opposing side edges of the strip, with an electrical conductivity deviating from the conductive capacity of the first and second edge areas of the strip separated by the zone, c h a r a c t e r i z e d in that the electrical conductivity is measured between a first measuring point in the first edge area and a second measuring point in the second edge area, a first measurement value thus being obtained, and between the first measuring point and a third measuring point (23) in the first edge area (11'), a second measurement value thus being obtained, and possibly forming a quotient of the measuring values and in that the necessary condition for a genuine ticket is that the first measurement value is within a first interval and the second measurement value within a predetermined second interval or that the quotient lies within a predetermined third interval.

2.        Method as claimed in claim 1, c h a r a c t e r i z e d in that if the necessary condition for a genuine ticket is met, a portion including the area for the first or third measuring point, in that the conductivity between the first and third measuring points is measured once again, thus obtaining a third measurement value, and in that the ticket is regarded as genuine only when the third measurement value is substantially zero.

3.        Method as claimed in claim 1, c h a r a c t e r i z e d in that the conductivity between the first measuring point and a fourth measuring point in the first edge area is also measured, a fourth measurement value being obtained, and in that the ticket is considered as genuine only when a second condition is also met, i.e. that the fourth measurement value lies within a predetermined fourth interval.

4.        Method as claimed in claim 3, c h a r a c t e r i z e d in that if the necessary conditions for a genuine ticket are met, a portion of the ticket is subsequently cut off, this portion including the area for the first, third or fourth measuring point, in that the conductivity once again measured between the first measuring point and the measuring point in the position of the cut-away portion, a fourth measuring value thus being obtained and in that the ticket is considered genuine only if the fifth measurement value is substantially zero.

5.        Method as claimed in claim 2 or 4, c h a r a c t e r i z e d in that the portion includes a part of the zone.

6.          Ticket, which includes a substructure (1) with at least one strip (14) of an electrically conductive material, c h a r a c t e r i z e d  in that the strip (14) includes a zone (13) spaced from two opposing side edges (11, 12) of the strip and having an electrical conductivity deviating from that of the first and second ege areas (11', 12') of the strip separated by the zone (13).

7.          Ticket as claimed in claim 6, c h a r a c t e r i z e d  in that the zone (13) includes at least one area (31, 41) of a first kind with at least one area (32, 45) of a second kind, at least the area (31, 41) of the first kind having an electrical conductivity deviating from that of the edge areas (11', 12').

8.          Ticket as claimed in claim 7, c h a r a c t e r i z e d  in that the area (31, 41) of the first kind has a conductivity which is substantially zero.

9.          Method as claimed in claim 7 or 8, c h a r a c t e r i z e d  in that the area (32, 45) of the second kind form bands of electrically conductive material connecting the edge areas.

10.          Ticket as claimed in claim 7, 8 or 9, c h a r a c t e r i z e d  in that the area (31, 41) of the first kind includes two straight, preferably parallel bands (42, 43) which are mutually connected via a third band (44), which preferably connects the two end points of the parallel bands, said points being contiguous to the first edge area (11').

11.          Ticket as claimed in anyone of claims 6 - 10, c h a r a c t e r i z e d  in that the electrically conductive material of the edge areas (11', 12') is an electrically conductive pigment.

12.          Ticket as claimed in anyone of claims 6 - 11, c h a r a c t e r i z e d  in that the zone (13) includes an electrically conductive pigment.

13.          Ticket  as  claimed  in  anyone  of  claims  6  -  12, c h a r a c t e r i z e d  in that the area (31, 41) of the first kind is coated with an electrically non-conductive pigment or lacks coating.

14.          Ticket as claimed in claims 10 - 13, c h a r a c t e r i z e d  in that the bands (42, 43) extend into the other edge area (12').

15.          Ticket as claimed in claim 6, c h a r a c t e r i z e d  in that the first edge area (11') has a conductivity differing from that of the second edge area (12').

16.          Ticket as claimed in claim 16, c h a r a c t e r i z e d  in that the zone (13) is the boundary layer between the edge areas (11', 12').

Fig 1

Fig 2

Fig 3

0196289

0196289

Fig 6

Fig 5

Fig 4